# EUROPÄISCHE PATENTSCHRIFT

(11) **EP 2 427 319 B1**
(45) Veröffentlichungstag und Bekanntmachung des Hinweises auf die Patenterteilung: **19.06.2013**
(21) Anmeldenummer: 10717132.4
(22) Anmeldetag: 29.04.2010
(51) Int. Cl.: B29C 45/73, B29C 45/78

(54) **STEUERUNGSEINRICHTUNG FÜR EINE SPRITZGIESSMASCHINE**
CONTOL UNIT FOR INJECTION MOULDING MACHINE
UNITÉ DE COMMANDE POUR PRESSE À INJECTER

(30) Priorität: 07.05.2009 DE 102009020193
(43) Veröffentlichungstag der Anmeldung: 14.03.2012
(73) Patentinhaber: KraussMaffei Technologies GmbH, 80997 München (DE)
(72) Erfinder: GRIMM, Günther, 86567 Hilgertshausen (DE)
(74) Vertreter: Wilhelm, Ludwig
(86) Internationale Anmeldenummer: PCT/EP2010/055818
(87) Internationale Veröffentlichungsnummer: WO 2010/127990

(56) Entgegenhaltungen:
- WO-A1-2009/101890
- US-A- 5 376 317
- US-A1- 2005 115 955

## Beschreibung

In vielen Fällen werden die in einer Spritzgießmaschine eingesetzten Spritzgießwerkzeuge auf einer konstanten Temperatur gehalten, um eine schnelle Abkühlung des Formteils zu ermöglichen. Zunehmend wird jedoch gefordert, dass das Spritzgießwerkzeug vor dem Einspritzen zunächst kurzfristig aufgeheizt wird, zum Beispiel auf die Temperatur der Kunststoffschmelze, und erst nach dem Einspritzen auf die Entformungstemperatur abgekühlt wird. Man spricht in diesem Falle auch von einer dynamischen oder variothermen Temperierung. Diese Technik der dynamischen Temperierung von Spritzgießwerkzeugen ist schon seit vielen Jahren bekannt (Menges/Michaeli/Mohren: "Anleitung zum Bau von Spritzgießwerkzeugen, 5.Auflage, Hanser-Verlag, 1999, Kapitel 8.7.4 "Dynamische Werkzeugtemperierung"). In dem Aufsatz "Variotherme Temperierung - Methoden und Einsatzmöglichkeiten" von J.Gießauf, ENGEL Austria GmbH, VDI Fachtagung "Spritzgießen 2008 - Innovation und Produktivität" vom 29.-30. Januar 2008 in Baden-Baden, Deutschland, werden verschiedene Methoden zur variothermen Temperierung von Spritzgießwerkzeugen und deren Anwendungsmöglichkeiten vorgestellt.

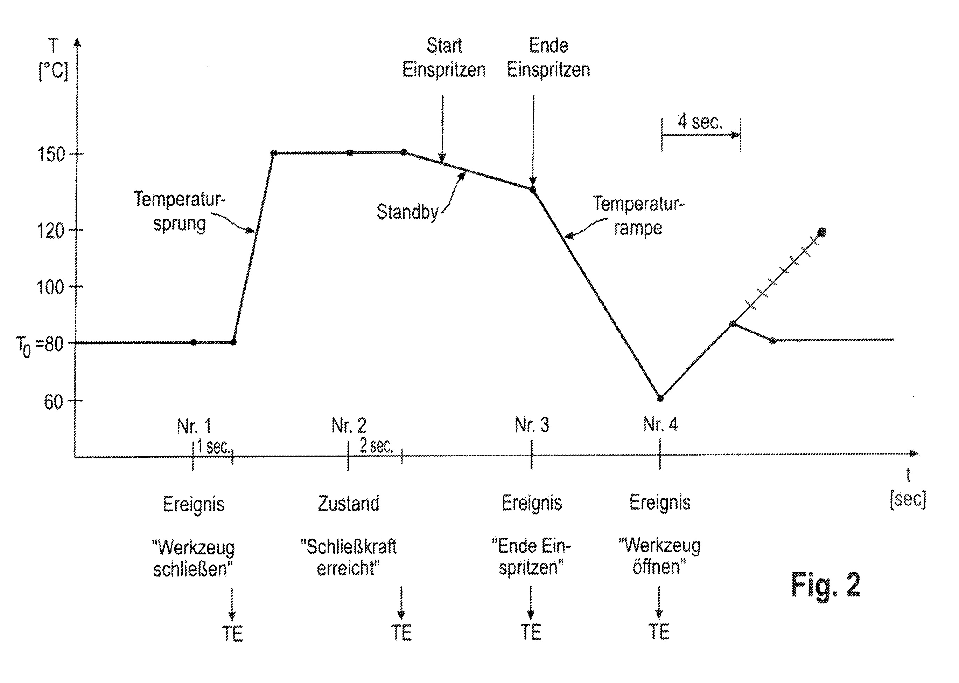

Aus den Dokumenten DE102007019389 A1, WO97/16274A1 und US5376317A sind Temperiereinrichtungen für eine dynamische oder variotherme Temperierung von Spritzgießwerkzeugen bekannt, die mit zwei getrennten Temperierkreisläufen arbeiten, nämlich einem ersten Temperierkreislauf mit einer Flüssigkeit einer ersten Temperatur (zum Beispiel relativ heißes Wasser oder Öl) und einem zweiten Temperierkreislauf mit einer Flüssigkeit einer zweiten Temperatur (zum Beispiel relativ kaltes Wasser oder Öl). Zu vorgegeben Zeitpunkten wird mittels einer Steuerungseinrichtung zwischen den beiden Temperierkreisläufen hin- und her geschaltet werden. Diese Zeitpunkte können durch bestimmte während des Spritzgießzyklus auftretende Ereignisse oder Zustände definiert sein, wie beispielsweise durch das Ereignis "Form geöffnet" oder den Zustand "Maximaldruck in Kavität erreicht" (siehe hierzu beispielsweise die US5376317A, Spalte 11, Zeilen 18 - 52). Auf diese Weise kann mit einer solchen Temperiereinrichtung ein Spritzgießwerkzeug innerhalb eines jeden Spritzgießzyklus zunächst erwärmt und nachfolgend abgekühlt werden. Dabei kann im Spritzgießwerkzeug ein zeitlicher Temperaturverlauf erreicht werden, wie er beispielsweise in der Figur 2a der US5376317A dargestellt ist. Aus der DE102007019389A1 ist eine speicherprogrammierbare Steuerung (SPS) für die Temperaturregelung bekannt, wobei über diese SPS von Sensoren wie zum Beispiel Temperatursensoren erfasste Daten verarbeitet und Stellsignale an bestimmte Teile der Temperiereinrichtung ausgegeben werden. Signale für die Umschaltzeitpunkte zwischen kälterem und wärmerem Medium können prozessabhängig von der Maschinensteuerung über programmierbare Ein-und/oder Ausgänge bereitgestellt werden.

Bei den bekannten Spritzgießmaschinen und Temperiereinrichtungen sind die Zeitpunkte, zu denen sich die Temperaturen im Spritzgießwerkzeug ändern sollen, bei denen also zum Beispiel von Heizen auf Kühlen umgeschaltet werden soll und umgekehrt, fest vorgegeben beziehungsweise fest programmiert, üblicherweise in einer speicherprogrammierbaren Steuerung (SPS). Dies gilt auch dann, wenn diese Zeitpunkte durch bestimmte während des Spritzgießzyklus auftretende Ereignisse oder Zustände definiert sind, wie dies beispielsweise aus der oben genannten US5376317A bekannt. Lediglich Temperaturwerte als solche, die mit der Temperiereinrichtung durch Heizen bzw. Kühlen angefahren werden sollen (Sollwert-Temperaturen), können von einer Bedienperson in eine Steuerungseinrichtung eingegeben werden. Somit kann von einer Bedienperson der Spritzgießmaschine ein Sollwert-Temperaturprofil nur in geringem Masse selbst bestimmt oder eingestellt werden. Ein Anwender oder Betreiber einer Spritzgießmaschine hat somit nur wenig Möglichkeiten, Einfluss auf den Temperaturverlauf im Spritzgießwerkzeug zu nehmen. Um das Sollwert-Temperaturprofil im Hinblick auf den zeitlichen Ablauf zu ändern, muss die SPS umprogrammiert werden, wozu ein Anwender oder Betreiber einer Spritzgießmaschine in der Regel nicht in der Lage ist. Dies bedeutet, dass geeignetes Fachpersonal hinzuziehen ist, was mit einem gewissen Zeit- und Kostenaufwand verbunden ist.

Ausgehend von dem vorgenannten Stand der Technik liegt der Erfindung die Aufgabe zugrunde, eine Steuerungseinrichtung für eine Spritzgießmaschine anzugeben, mit der von einer Bedienperson der Spritzgießmaschine auf einfache Art und Weise ein bestimmtes und insbesondere auf jeden Spritzgießzyklus zeitlich exakt abgestimmtes Sollwert-Temperaturprofil (zyklussynchrones Sollwert-Temperaturprofil) erstellt werden kann.

Die Lösung dieser Aufgabe erfolgt durch eine Steuerungseinrichtung mit den Merkmalen von Anspruch 1. Vorteilhafte Weiterentwicklungen und Ausgestaltungen finden sich in den Unteransprüchen.

Dadurch, dass die Steuerungseinrichtung derart ausgebildet ist,
- dass mehrere für einen Spritzgießzyklus spezifische und während des Spritzgießzyklus eintretende Ereignisse und/oder Zustände in der Steuerungseinrichtung hinterlegt oder hinterlegbar sind,
- dass diese Ereignisse und/oder Zustände jeweils als eine Startbedingung zum Ansteuern einer oder mehrerer Temperiereinrichtungen zum Temperieren eines Spritzgießwerkzeugs vorgesehen sind,
- dass diese Ereignisse und/oder Zustände einer Bedienperson zum Auswählen bestimmter Ereignisse und/oder betimmter Zustände zur Verfügung stehen,
- dass mehrere Typen von Temperaturänderungen in der Steuerungseinrichtung hinterlegt oder hinterlegbar sind,
- dass diese Typen von Temperaturänderungen der Bedienperson zum Auswählen bestimmter Typen von Temperaturänderungen zur Verfügung stehen,
- dass einerseits bestimmte Ereignisse und/oder bestimmte Zustände sowie andererseits bestimmte Typen von Temperaturänderungen von der Bedienperson ausgewählt und jeweils einander zugeordnet werden können,
- dass eine Reihe aus mehreren derart einander zugeordneten Ereignissen und/oder Zuständen einerseits sowie Typen von Temperaturänderungen andererseits gebildet werden kann,
- dass mit einer derart gebildeten Reihe von der Bedienperson ein zeitlicher Verlauf einer Temperatur in einem zu temperierenden Bereich eines Spritzgießwerkzeugs erstellt werden kann,
- und dass der zeitliche Verlauf der Temperatur durch die während des Spritzgießzyklus im Laufe der Zeit der Reihe nach eintretenden Ereignisse und/oder Zustände sowie den diesen Ereignissen und/oder Zuständen zugeordneten Typen von Temperaturänderungen vorgegeben ist, so dass der so erstellte zeitliche Verlauf der Temperatur ein zyklussynchrones Temperaturprofil darstellt,
kann eine Bedienperson auf einfache Art und Weise ein Sollwert-Temperaturprofil frei programmieren, ohne dass auf die SPS zugegriffen oder in diese eingegriffen werden muss. Die Bedienperson muss nämlich lediglich aus den zur Verfügung stehenden Ereignissen und/oder Zuständen sowie aus den zur Verfügung stehenden Typen von Temperaturänderungen die gewünschten Ereignisse und/oder Zustände sowie die gewünschten Typen von Temperaturänderungen auswählen und diese einander zuordnen. Aus mehreren derart einander zugeordneten Ereignissen und/oder Zuständen einerseits sowie Typen von Temperaturänderungen andererseits kann eine Reihe gebildet werden. Anders ausgedrückt wird aus mehreren solcher Zuordnungen eine Reihe gebildet. Durch diese Reihe einander zugeordneter Ereignisse/Zustände und Typen von Temperaturänderungen ergibt sich eine zeitliche Abfolge von Ereignissen und/oder Zuständen. Damit einher geht eine zeitliche Abfolge von Typen von Temperaturänderungen, nämlich entsprechend der von der Bedienperson vorgenommenen Zuordnung zu den ausgewählten bestimmten Ereignissen und/oder Zuständen. Im Ergebnis ergibt sich somit ein zeitlicher Verlauf der Temperatur durch die während des Spritzgießzyklus im Lauf der Zeit der Reihe nach eintretenden Ereignisse und/oder Zustände und der so erstellte zeitliche Verlauf der Temperatur bildet das von der Bedienperson frei programmierte bzw. frei eingestellte Temperaturprofil. Beim Abfahren dieses Temperaturprofils durch die Steuerungseinrichtung werden eine oder mehrere Temperiereinrichtungen beim Eintreten der Ereignisse und/oder Zustände angesteuert und in einer Weise betrieben, wie es dem Temperaturprofil entspricht.

Eine Bedienperson kann somit auf einfache Art und Weise ein Sollwert-Temperaturprofil erstellen bzw. frei programmieren, das sich nicht an exakten und fest vorgegebenen absoluten Zeitpunkten orientiert, sondern das zyklussynchron den Ereignissen und/oder Zuständen folgt, die im Verlaufe eines Spritzgießzyklus eintreten. Daher spielt es beim Betrieb der Spritzgießmaschine keine Rolle, zu welchem Zeitpunkt diese Ereignisse und/oder Zustände eintreten, d.h. etwaige zeitliche Verzögerungen aufgrund von Störeinflüssen haben keinen negativen Einfluss auf das abzufahrende Temperatur-Sollwertprofil.

Den Startbedingungen können darüberhinaus bestimmte Temperatur-Sollwerte zugeordnet werden, die von der Temperiereinrichtung angefahren werden sollen. Die Temperiereinrichtung wird in der Weise betrieben, dass die Temperatur in dem zu temperierenden Bereich in Richtung des für diesen Bereich vorgegebenen Temperatur-Sollwertes verändert wird. Sollte sich beim Betrieb der Spritzgießmaschine ergeben, dass die Temperatur-Sollwerte nicht oder nicht zuverlässig entsprechend dem zeitlichen Verlauf des Sollwert-Temperaturprofils erreicht werden, kann die Temperiereinrichtung umgerüstet oder eine andere Temperiereinrichtung eingesetzt werden. Ausserdem ist es möglich, dass die Bedienperson "ihr" Sollwert-Temperaturprofil ändert und den Gegebenheiten anpasst, wie sie insbesondere aufgrund der vorhandenen Spritzgießmaschine, des vorhandenen Spritzgießwerkzeugs und den daran angeschlossenen Temperiereinrichtungen vorgegeben sind.

Die Flexibilität in der freien Programmierbarkeit des Temperaturprofils wird durch die Möglichkeit einer zeitverzögerten Ansteuerung der Temperiereinrichtung erhöht. Eine Bedienperson kann einfach Zeiten vorgeben und in die Steuerungseinrichtung eingeben, um die sich die Ansteuerung der Temperiereinrichtung bei Eintreten einer Startbedingung verzögern soll. Dies bedeutet, dass nach Eintritt eines Ereignisses und/oder Zustands entsprechend dem erstellten Sollwert-Temperaturprofil die eingegebene Zeit verstreichen soll, bevor die Temperiereinrichtung angesteuert wird.

Je nach Bedarf können verschiedene Typen von Temperaturänderungen in der Steuerungseinrichtung hinterlegt sein oder in dieser hinterlegt werden.
Beispielhaft seien folgende Typen von Temperaturänderungen genannt:
- ein Temperatursprung, d.h. die Temperiereinrichtung soll in der Weise betrieben werden, dass die nächste Soll-Temperatur möglichst schnell erreicht wird;
- eine Temperaturrampe, d.h. die Temperiereinrichtung soll in der Weise betrieben werden, dass die nächste Soll-Temperatur auf einer aufsteigenden (bei Temperaturanstieg) oder absteigenden (bei Temperaturrückgang) Rampe erreicht wird, wobei die Steigung der Rampe (ΔT/Δt) einstellbar sein kann;
- eine "Standby"-Temperaturänderung, welche sich dadurch auszeichnet, dass die Temperierung lediglich abgebrochen wird, wobei die Regelung der Temperiereinheit in einen definierten Wartezustand gebracht wird und die Werkzeugtemperatur in dieser Zeit nicht aktiv beeinflusst wird;
- keine Temperaturänderung, d.h. die erreichte oder vorliegende Temperatur soll beibehalten werden.
Weitere Typen von Temperaturänderungen sind denkbar und können gegebenenfalls in der Steuerungseinrichtung hinterlegt sein oder über Datenträger eingelesen werden.

Die Steuerungseinrichtung verfügt vorzugsweise über eine Bedieneinheit mit einem Bildschirm, in dem bei Aufruf eines bestimmten Programms eine Anzahl von Fenstern zur Verfügung gestellt werden, um darin Informationen anzuzeigen und eingeben zu können. Ein erstes Fenster kann vorgesehen sein oder geöffnet werden, in dem die zur Auswahl zur Verfügung stehenden Ereignisse und/oder Zustände angezeigt werden, aus denen von der Bedienperson gewünschte bzw. bestimmte Ereignisse und/oder Zustände als Startbedingung zum Ansteuern der Temperiereinrichtung ausgewählt werden können. Ein zweites Fenster kann vorgesehen sein oder geöffnet werden, in dem die zur Auswahl zur Verfügung stehenden Typen von Temperaturänderungen angezeigt werden, aus denen von der Bedienperson gewünschte bzw. bestimmte Typen von Temperaturänderungen ausgewählt und einer Startbedingung zugeordnet werden können. Durch wiederholte Auswahl von bestimmten Ereignissen und/oder Zuständen einerseits sowie bestimmten Typen von Temperaturänderungen andererseits und deren Zuordnung zueinander kann eine Reihe von einander zugeordneten Ereignissen/Zuständen und Typen von Temperaturänderungen gebildet werden. Darüber hinaus können weitere Fenster zur Auswahl oder zur Eingabe von Zahlenwerten für einen oder mehrere weitere Parameter vorgesehen sein.

Eine Spritzgießmaschine mit einer erfindungsgemäßen Steuerungseinrichtung und einer von der Steuerungseinrichtung ansteuerbaren Temperiereinrichtung eignet sich in besonderem Maße für die Herstellung von Kunststoff-Formteilen mittels der eingangs genannten variothermen Temperierung von Spritzgießwerkzeugen. Je nach Kunststoff-Formteil kann es vorteilhaft sein, in dem Spritzgießwerkzeug für die Herstellung von diesem Kunststoff-Formteil mehrere Bereiche vorzusehen, die unabhängig voneinander temperierbar sind. Für diese verschiedenen Bereiche eines Spritzgießwerkzeugs können somit unterschiedliche Temperatur-Sollwerte, insbesondere unterschiedliche Sollwert-Temperaturprofile erstellt werden. Hierzu kann in der Steuerungseinrichtung eine Anzahl von anwählbaren zu temperierenden Bereichen hinterlegt und von einer Bedienperson auswählbar sein. Für jeden dieser Bereiche kann ein eigenes Sollwert-Temperaturprofil von einem Anwender oder Bediener der Spritzgießmaschine frei programmiert werden. Dabei kann es sinnvoll sein, für jeden separat zu temperierenden Bereich und damit für jeden Temperaturkanal der Steuerungseinrichtung eine eigene Temperiereinrichtung vorzusehen. Je nach Ausführung eines Temperiergerätes können mehrere Temperiereinrichtungen in einem einzigen Temperiergerät "zusammengefasst" und gemeinsam untergebracht sein.

Nachfolgend soll die Erfindung anhand eines Ausführungsbeispiels näher erläutert werden. Als Spritzgießmaschine kann jede an sich bekannte Spritzgießmaschine mit Plastifizier- und Spritzeinheit sowie mit einer Schließeinheit mit einem oder mehreren Spritzgießwerkzeugen vorgesehen werden. Die Steuerungseinrichtung der Spritzgießmaschine verfügt über ein Programm zur Erstellung und zum Abfahren eines gewünschten Sollwert-Temperaturprofils.

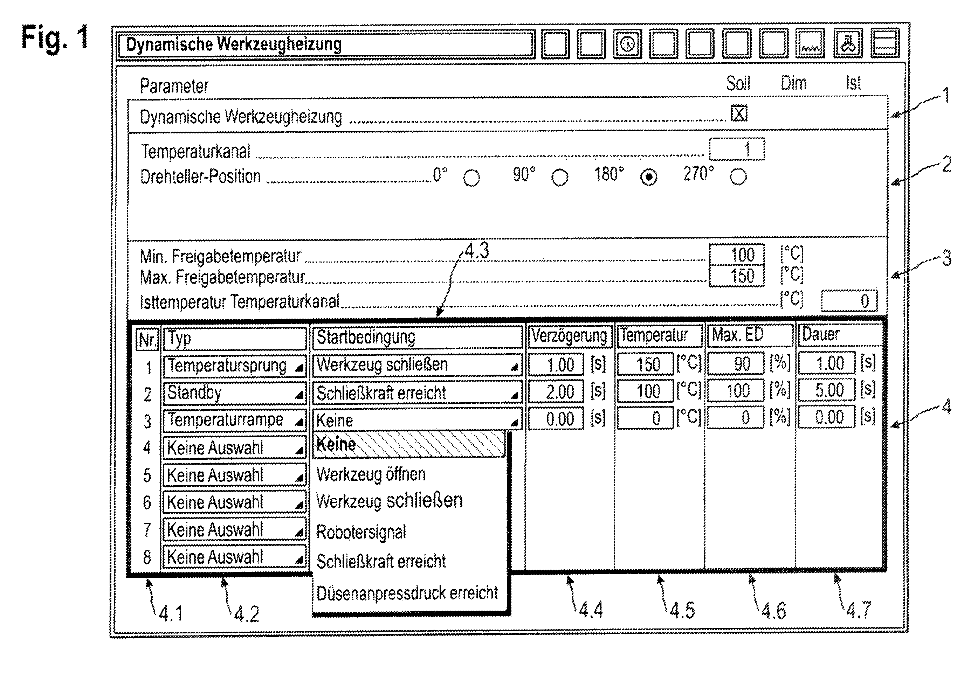

Die Figur 1 zeigt einen Ausschnitt von einem Bildschirm der Bedieneinheit der Steuerungseinrichtung bei Aufruf des Programms "Dynamische Werkzeugheizung". In einem ersten Fenster 1 kann eine Bedienperson die Funktionalität "Dynamische Werkzeugheizung" ein- oder ausschalten, indem in dem einzigen Kästchen ein Kreuz gesetzt wird oder nicht.

In einem Fenster 2 kann derjenige Temperaturkanal ausgewählt werden, auf den sich die nachfolgend einzugebenen Temperaturwerte und das spätere Sollwert-Temperaturprofil beziehen sollen. Ein Temperaturkanal kann beispielsweise einer bestimmten Zone in einem Spritzgießwerkzeug zugeordnet sein. Es können beispielsweise ein erster Temperaturkanal für die eine Formhälfte und ein zweiter Temperaturkanal für die andere Formhälfte vorgesehen sein, um die beiden Formhälften des Spritzgießwerkzeugs unterschiedlich und unabhängig voneinander zu temperieren. Es können aber auch zwei Temperaturkanäle in einer Formhälfte vorgesehen sein, wenn man etwa unterschiedliche Zonen unterschiedlich temperieren möchte. Bei einem Temperaturkanal könnte es sich beispielsweise um einen von einem flüssigen Temperiermedium durchströmten Kanal in einem bestimmten Bereich des Spritzgießwerkzeugs handeln. Es sind aber auch andere Arten der Temperierung für diese Zone bzw. Bereich und somit für diesen Temperaturkanal denkbar, beispielsweise mittels einer elektrischen Widerstandsheizung, Infrarotstrahler, Peltierheizung oder anderen Temperiermitteln. Im vorliegenden Fall handelt es sich um den Temperaturkanal 1. Es können eine oder mehrere Temperiereinrichtungen vorgesehen werden, wobei vorzugsweise für jeden Temperaturkanal eine eigene Temperiereinrichtung vorgesehen ist. Dies könnte in der Praxis auch nur ein einziges Temperiergerät sein, sofern dieses in der Lage ist, unterschiedliche Temperaturkanäle unabhängig voneinander zu temperieren.

Desweiteren können weitere Einstellmöglichkeiten je nach verwendetem Typ von Spritzgießwerkzeug zur Verfügung gestellt werden. Bei Verwendung von Spritzgießwerkzeugen für ein Mehrkomponenten-Spritzgießen mittels der sogenannten Drehtellertechnik kann beispielsweise vorgegeben werden, in welcher Position des Drehtellers eine dynamische Werkzeugtemperierung erfolgen soll, vorliegend in der Position 180°.

In einem weiteren Fenster 3 ist eine Anzeige für den Ist-Wert in dem ausgewählten Temperaturkanal vorgesehen sowie die Möglichkeit zur Eingabe einer minimalen und einer maximalen Freigabetemperatur. Bei einer Freigabetemperatur handelt sich um diejenige Temperatur, die vorliegen muss, bevor der Start für den nächsten Einspritzvorgang erfolgen kann, d.h. bevor dieser Start "freigegeben" wird. Im vorliegenden Beispiel muss die Temperatur im Temperaturkanal 1 somit einen Wert zwischen 100°C und 150°C aufweisen, damit der Start für das Einspritzen überhaupt freigegeben wird. In der Praxis würde bei ordnungsgemäßem Betrieb der Spritzgießmaschine kurz vor dem Einspritzen ein Istwert zwischen 100°C und 150°C als "Isttemperatur Temperaturkanal" angezeigt werden. Würde hingegen im Temperaturkanal 1 ein Temperaturwert außerhalb dieses Bereichs vorliegen und angezeigt werden, könnte der Start für das Einspritzen noch nicht freigegeben werden. Die minimalen und maximalen Freigabetemperaturen hängen unter anderem von dem zu verarbeitenden Kunststoffmaterial ab. Für jedes Kunststoffmaterial werden bevorzugte Verarbeitungstemperaturen vom Hersteller des Kunststoffmaterials vorgegeben.

Das in der Figur zuunterst befindliche Fenster 4 besteht aus mehreren Fenstern oder Spalten 4.1 bis 4.7, deren Bedeutung nachfolgend näher beschrieben werden soll:

### Spalte 4.1

Die Spalte 4.1 zeigt eine laufende Nummer "Nr." an, die jeweils einem bestimmten Abschnitt eines Spritzgießzyklus zugeordnet ist. Je nach Spritzgießzyklus kann eine mehr oder weniger feine Gliederung eines ganzen Spritzgießzyklus in einzelne durchnummerierte Abschnitte vorgesehen sein. Vorliegend könnte beispielsweise ein Spritzgießzyklus in acht Abschnitte aufgeteilt werden.

### Spalte 4.2

In Spalte 4.2 kann die Bedienperson zu jeder laufenden Nummer aus den zur Verfügung stehenden Typen von Temperaturänderungen einen bestimmten Typ auswählen und damit einen bestimmten Typ von Temperaturwechsel für diese Nummer vorgeben. Hierfür sind in der Steuerung der Spritzgießmaschine verschiedene Typen für einen Temperaturwechsel hinterlegt oder können von einem Datenträger in die Steuerung eingelesen und hinterlegt werden. Die so hinterlegten Typen von Temperaturänderungen bilden eine Auswahl, die der Bedienperson bei der freien Programmierung des Sollwert-Temperaturprofils zur Verfügung stehen und aus denen die Bedienperson den gerade gewünschten oder bestimmten Typ auswählen kann. Im vorliegenden Beispiel stehen der Bedienperson drei verschiedene Typen von Temperaturänderungen für einen Temperaturwechsel zur Verfügung, die in den Zeilen Nr.1 bis Nr.3 angezeigt sind, nämlich ein Temperatursprung, ein Standby und eine Temperaturrampe. Grundsätzlich sind aber auch andere Typen von Temperaturänderungen für einen Temperaturwechsel denkbar.

### Spalte 4.3

In dieser Spalte kann die Bedienperson zu jeder laufenden Nummer eine bestimmte Startbedingung aus vorgegebenen oder vorgebbaren Startbedingungen auswählen. Hierzu sind mehrere für den Spritzgießzyklus spezifische und während des Spritzgießzyklus eintretende Ereignisse und/oder Zustände in der Steuerungseinrichtung hinterlegt oder hinterlegbar. Die so hinterlegten Ereignisse und/oder Zustände stehen der Bedienperson zur Auswahl zur Verfügung. Hierbei kann es sich beispielsweise um die nachfolgend aufgelisteten, für einen Spritzgießzyklus spezifischen und während des Spritzgießzyklus eintretenden Ereignisse und Zustände handeln, aus denen die Bedienperson eine Auswahl treffen kann:
Auswählbare Ereignisse:
   - "Werkzeug schließen" ist das Ereignis, dass mit dem Zufahren des Werkzeugs gestartet wird;
   - "Werkzeug öffnen" ist das Ereignis, dass mit dem Auffahren des Werkzeugs gestartet wird;
   - "Robotersignal" ist das Ereignis, dass ein Signal von einem Roboter an die Spritzgießmaschine gegeben wird (z.B. mit dem Positionieren eines Einlegeteils oder zum Erwärmen eines Einlegeteils mit Hilfe eines Infrarotstrahlers).
Auswählbare Zustände:
   - "Schließkraft erreicht" ist der Zustand, in dem eine vorgegebene Schließkraft tatsächlich erreicht worden ist;
   - "Düsenanpressdruck erreicht" ist der Zustand, in dem ein vorgegebener Düsenanpressdruck erreicht worden ist.

### Spalte 4.4

Hier ist die Möglichkeit gegeben, eine zeitverzögerte Ansteuerung der Temperiereinrichtung vorzusehen. Dies bedeutet, dass nicht sofort bei Eintreten einer Startbedingung der Temperaturwechsel entsprechend dem zugeordneten Typ von Temperaturänderung gestartet wird, sondern erst mit einer gewissen Zeitverzögerung. Die Bedienperson kann also zum Beispiel eingeben, dass erst eine bestimmte Zeit nach Beginn des Zufahrens des Werkzeugs ein Temperaturwechsel starten soll, also erst eine bestimmte Zeit nach dem Eintritt des Ereignisses "Werkzeug schließen". Im vorliegenden Beispiel beträgt diese Verzögerungszeit 1 Sekunde. Ferner könnte wie im vorliegenden Beispiel noch eine bestimmte Zeit nach dem Eintritt des Ereignisses "Schließkraft erreicht" gewartet werden - vorliegend 2 Sekunden - bis der Temperaturwechsel auf 100°C gemäß dem Typ "Standby" erfolgen soll. Der Typ "Standby" zeichnet sich dadurch aus, dass die Temperierung lediglich ausgeschaltet wird, beispielsweise indem das Regelgerät zur Temperierung abgeschaltet wird, und eine Abkühlung auf die hier gewünschte Temperatur von 100°C erzielt wird, indem die vorhandene Wärme einfach an die Umgebung abgegeben wird. Bei Verwendung eines Temperiergeräts mit einem flüssigen Temperiermedium könnte beispielsweise die Förderung des Temperiermediums gestoppt werden. Erst wenn die vorgegebene Temperatur von vorliegend 100°C erreicht worden ist, wird die Temperierung wieder aktiviert und beispielsweise das Regelgerät wieder eingeschaltet. Bei Verwendung eines Temperiergeräts mit einem flüssigen Temperiermedium könnte dann die Förderung des Temperiermediums und die Regelung der gewünschten Temperatur wieder gestartet werden.

### Spalte 4.5

In dieser Spalte können diejenigen Temperaturen eingegeben werden, die bei dem Temperaturwechsel gemäß der laufenden Nummer in der Spalte 4.1 erzielt werden sollen. Es handelt sich also um Temperatursollwerte, die den gewünschten Temperaturverlauf in einem Zyklus ergeben.

### Spalte 4.6

In dieser Spalte kann die vom Temperaturregler des Regelgeräts berechnete Einschaltdauer ED der Regelstrecke nach oben begrenzt werden. Auf diese Art und Weise kann die Heizleistung in dieser Phase auf ein gewünschtes Maximum begrenzt werden.

### Spalte 4.7

Hier hat der Bediener die Möglichkeit, den jeweiligen Abschnitt (d.h. die Nummer aus Spalte 4.1) des Spritzgießzyklus zeitlich zu begrenzen. Ein Zyklusabschnitt ist beendet, wenn entweder die Solltemperatur in der Spalte 4.5 erreicht ist oder wenn die nächste Startbedingung in 4.3, also das nächste Ereignis bzw. der nächste Zustand, erreicht ist. Es kann aber auch zu einem vorzeitigen Abbruch kommen, wenn eine vorgewählte Zeitdauer, die in Spalte 4.7. eingetragen wird, erreicht ist. Letzteres ist insbesondere am Ende eines Spritzgießzyklus sinnvoll, wenn man die dann vorliegende Solltemperatur nicht bis zum Eintreten der nächsten Startbedingung aufrechterhalten möchte, sondern beispielsweise die Temperiereinrichtung abschalten und auf einen übergeordneten Regelkreis für eine Standardbetriebstemperatur umschalten will. Auch im Falle einer Störung kann dies sinnvoll sein.

Insgesamt ist im vorliegenden Beispiel somit eine Reihe von acht einander zugeordneten Ereignissen und/oder Zuständen einerseits und Typen von Temperaturänderungen andererseits bildbar. Es können somit von einer Bedienperson acht Paare von Ereignissen/Zuständen und Typen von Temperaturänderungen gebildet werden. Je nach Programmierung der Steuerungseinrichtung können mehr oder weniger von derart einander zugeordneten Paaren von Ereignissen/Zuständen und Typen von Temperaturänderungen gebildet werden.

Anstelle von einem oder mehreren der hier beschriebenen Fenster können auch nur geeignete Bereiche innerhalb eines einzigen Fensters vorgesehen werden, um Daten anzuzeigen und/oder einzugeben. Ebenso ist es denkbar, separate Bildschirmseiten zur Anzeige und/oder Eingabe von Daten vorzusehen. Bildschirmseiten können als Ersatz für Fenster und/oder Bereiche vorgesehen sein; sie können aber auch mit Fenstern und/oder Bereichen kombiniert werden. Die gewünschte Visualisierung zur Anzeige und/oder Eingabe von Daten hängt von den jeweiligen Umständen ab und ist keine Beschränkung der Erfindung.

Für das in der Figur 1 dargestellte Beispiel ergibt sich (zumindest für einen Teil eines Spritzgießzyklus) somit folgender Ablauf:
1 Mit Beginn des Zufahrens des Werkzeugs wird eine Zeitzählung gestartet und nach 1 Sekunde wird ein Temperatursprung gestartet, um das Werkzeug bzw. den ausgewählten Temperaturkanal so schnell wie möglich von der bisherigen Temperatur auf eine Solltemperatur von 150°C aufzuheizen. Dabei wird die Temperiereinrichtung angesteuert und in einer Weise betrieben, dass innerhalb kürzester Zeit eine Temperatur von 150°C im Werkzeug in der Zone mit dem Temperaturkanal 1 vorliegt. Über geeignete Temperatursensoren kann die Temperatur in der Nähe der Werkzeugwand gemessen werden und einem Regelgerät zuführt werden.
2 Wenn das Werkzeug zugefahren ist und die Schließkraft aufgebaut wird, wird überwacht, wann eine vorgegebene Schließkraft erreicht worden ist. Sobald dieser Zustand erreicht worden ist, schaltet die Temperaturregelung mit einer Verzögerung von 2 Sekunden auf Standby, wobei der Temperatursollwert 100°C beträgt und der maximale ED Wert auf 100% begrenzt ist. Wie oben beschrieben wird die Temperierung gestoppt und zugewartet, bis eine Abkühlung auf 100°C erfolgt ist. Dann setzt die Temperierung wieder ein.
Analog kann der weitere Ablauf des Spritzgießzyklus und die zugehörigen Parameter zur Temperierung (Typ, Startbedingung, Verzögerung, ...) eingegeben werden, bis schließlich ein bestimmter Spritzgießzyklus mit einem bestimmten Sollwert-Temperaturverlauf vollständig eingestellt worden ist.

In der Figur 2 ist ein Sollwert-Temperaturprofil als Beispiel dargestellt, bei dem für die Abschnitte Nr.1 und Nr.2 des Spritzgießzyklus die im Bildschirmfenster der Figur 1 angezeigten Werte zumindest teilweise übernommen worden sind. Bis zum Eintritt eines ersten Ereignisses und Beginn des Abschnitts Nr.1 des Spritzgießzyklus wird durch einen übergeordneten Regelkreis eine Standardbetriebstemperatur von 80°C vorgegeben und geregelt. Sobald das Ereignis "Werkzeug schließen" eingetreten und 1 Sekunde vergangen ist, wird die Temperiereinrichtung TE angesteuert (siehe die Pfeile unten in der Figur 2) und zwar dergestalt, dass mit einem Temperatursprung die in Spalte 4.5 angegebene Temperatur von 150°C erreicht werden soll. Nach dem Schließen des Werkzeugs wird die Schließkraft aufgebaut und sobald eine vorgegebene Schließkraft erreicht ist, beginnt der Abschnitt Nr.2 des Spritzgießzyklus. Zwei Sekunden nach Eintreten des Zustands "Schießkraft erreicht" wird die Temperiereinrichtung TE angesteuert und zwar dergestalt, dass nunmehr auf Standby geschaltet wird, was oben erläutert worden ist. Kurze Zeit danach liegt der Start des Einspritzens und am Ende des Einspritzens beginnt der Abschnitt Nr.3, d.h. das Ereignis "Ende Einspritzen" ist die Startbedingung zum Ansteuern der Temperiereinrichtung TE und zwar in der Weise, dass eine Abkühlung auf 60°C mit einer Temperaturrampe erfolgen soll. Der Abschnitt Nr.4 beginnt mit dem Ereignis "Werkzeug öffnen". Dieses Ereignis gibt ein Steuersignal an die Temperiereinrichtung, das Werkzeug wieder aufzuheizen und zwar auf eine Temperatur von 120°C. Es sei angenommen, dass zu diesem Ereignis Nr.4 in der Spalte 4.7 eine Dauer von 4 Sekunden eingetragen ist. Dies bedeutet folgendes. Falls in dieser Zeit nicht ein nächstes Ereignis (z.B. "Robotersignal" oder "Werkzeug schließen") oder Zustand erreicht worden ist, beispielsweise aufgrund einer Störung, wird auf den übergeordneten Temperaturregelkreis zurückgeschaltet und die Standardbetriebstemperatur von vorliegend 80°C angefahren. Der Temperaturanstieg wird also abgebrochen (siehe den durchgestrichen dargestellten Bereich der Temperaturlinie). Nach Ablauf der Dauer in Spalte 4.7 wird somit die dynamische Werkzeugheizung vorübergehend abgeschaltet und zwar solange bis das nächste Ereignis oder der nächste Zustand - d.h. die nächste Startbedingung - erreicht ist. Dies kann beispielsweise der Beginn des nächsten Zyklus sein und mit dem Ereignis "Werkzeug schließen" starten.

Im Ergebnis erhält der Anwender somit die Möglichkeit, ohne Programmierkenntnisse "sein" Sollwert-Temperaturprofil zu erstellen, d.h. zu programmieren und gegebenenfalls zu optimieren. Dadurch dass die Startbedingungen durch die im Laufe des Spritzgießzyklus eintretenden Ereignisse und/oder Zustände vorgegeben sind, werden im Betrieb auftretende Abweichungen automatisch an das Temperaturprofil "weitergegeben", d.h. es kommt beispielsweise nicht darauf an, dass der Zustand "Schließkraft erreicht" immer zum selben Zeitpunkt erreicht wird oder ob dieser Zeitpunkt Schwankungen unterliegt.

Durch geeignete Massnahmen kann sichergestellt werden, dass keine unmöglichen oder sich nachteilig auswirkenden Parameter in die Steuerung eingegeben werden können. Beispielsweise könnten nur Temperaturwerte innerhalb vorgegebener Grenzen eingegeben werden und außerhalb liegende Temperaturwerte würden von dem Programm nicht akzeptiert. Ferner könnte ein Überwachungsmechanismus vorgesehen werden, der korrigierend eingreift, wenn im Laufe eines Spritzgießzyklus die vorgegebenen Temperatursollwerte beim Erreichen der nächsten Startbedingung noch nicht vorliegen. Im einfachsten Falle würde die Spritzgießmaschine einfach warten und den Spritzgießzyklus anhalten.

Welche Temperatur überwacht, d.h. gemessen wird, und für den in Spalte 4.5 eingegebenen Temperatursollwert als Regelgröße in den Regelkreis eingeht, hängt von den jeweiligen Umständen ab. Beispielsweise könnte es sich um eine Temperatur in der Werkzeugwand in der Nähe der Kavitätenfläche handeln. Es könnte sich aber auch um eine Temperatur eines Temperiermediums an einer bestimmten Stelle im Temperierkreislauf eines flüssigen Temperiermediums handeln.

## Patentansprüche

1. Steuerungseinrichtung für eine Spritzgießmaschine:
- wobei mehrere für einen Spritzgießzyklus spezifische und während des Spritzgießzyklus eintretende Ereignisse und/oder Zustände in der Steuerungseinrichtung hinterlegt oder hinterlegbar sind,
- wobei diese Ereignisse und/oder Zustände jeweils als eine Startbedingung zum Ansteuern einer oder mehrerer Temperiereinrichtungen zum Temperieren eines Spritzgießwerkzeugs vorgesehen sind,
- wobei diese Ereignisse und/oder Zustände einer Bedienperson zum Auswählen bestimmter Ereignisse und/oder bestimmter Zustände zur Verfügung stehen,
- wobei mehrere Typen von Temperaturänderungen in der Steuerungseinrichtung hinterlegt oder hinterlegbar sind,
- wobei diese Typen von Temperaturänderungen der Bedienperson zum Auswählen bestimmter Typen von Temperaturänderungen zur Verfügung stehen, dadurch gekennezeichnet, dass
- einerseits bestimmte Ereignisse und/oder bestimmte Zustände sowie andererseits bestimmte Typen von Temperaturänderungen von der Bedienperson ausgewählt und jeweils einander zugeordnet werden können,
- dass eine Reihe aus mehreren derart einander zugeordneten Ereignissen und/oder Zuständen einerseits sowie Typen von Temperaturänderungen andererseits gebildet werden kann,
- dass mit einer derart gebildeten Reihe von der Bedienperson ein zeitlicher Verlauf einer Temperatur in einem zu temperierenden Bereich eines Spritzgießwerkzeugs erstellt werden kann, und
- dass der zeitliche Verlauf der Temperatur durch die während des Spritzgießzyklus im Laufe der Zeit der Reihe nach eintretenden Ereignisse und/oder Zustände sowie den diesen Ereignissen und/oder Zuständen zugeordneten Typen von Temperaturänderungen vorgegeben ist, so dass der so erstellte zeitliche Verlauf der Temperatur ein zyklussynchrones Temperaturprofil darstellt.

2. Steurungseinrichtung nach Anspruch 1,
**dadurch gekennzeichnet, dass**
den Startbedingungen Temperatur-Sollwerte zugeordnet werden können und dass bei Eintreten einer Startbedingung die Temperiereinrichtung angesteuert und in der Weise betrieben werden kann, dass die Temperatur in dem zu temperierenden Bereich in Richtung des für diesen Bereich vorgegebenen Temperatur-Sollwertes verändert wird.

3. Steuerungseinrichtung nach einem der vorangehenden Ansprüche,
**dadurch gekennzeichnet, dass**
eine zeitverzögerte Ansteuerung der Temperiereinrichtung vorgesehen ist, wobei zu jedem ausgewählten Ereignis und/oder ausgewähltem Zustand eine bestimmte Zeit in die Steuerungseinrichtung eingegeben werden kann, die nach Eintritt dieses Ereignisses oder dieses Zustandes verstreichen soll, bevor die Ansteuerung der Temperiereinrichtung erfolgen soll.

4. Steuerungseinrichtung nach einem der vorangehenden Ansprüche,
**dadurch gekennzeichnet, dass**
folgende Typen von Temperaturänderungen vorgesehen sind und von der Bedienperson ausgewählt werden können:
- ein Temperatursprung, wobei die Temperiereinrichtung in der Weise betrieben werden soll, dass die nächste Soll-Temperatur möglichst schnell erreicht wird;
- eine Temperaturrampe, wobei die Temperiereinrichtung in der Weise betrieben werden soll, dass die nächste Soll-Temperatur auf einer aufsteigenden (bei Temperaturanstieg) oder absteigenden (bei Temperaturrückgang) Rampe erreicht werden soll, wobei die Steigung der Rampe (ΔT/Δt) gegebenenfalls einstellbar sein kann;
- eine "Standby"-Temperaturänderung, wobei der Betrieb der Temperiereinrichtung lediglich abgebrochen wird, und die Werkzeugtemperatur in dieser Zeit nicht aktiv beeinflusst wird;
- Keine Temperaturänderung, wobei die erreichte oder vorliegende Temperatur beibehalten werden soll.

5. Steuerungseinrichtung nach einem der vorstehende Ansprüche,
**dadurch gekennzeichnet, dass**
eine Bedieneinheit mit einem Bildschirm vorgesehen ist und dass auf dem Bildschirm ein erstes Fenster oder ein erster Bereich vorgesehen ist, in dem die Ereignisse und/oder Zustände angezeigt und als Startbedingung zum Ansteuern der Temperiereinrichtung von der Bedienperson ausgewählt werden können, und dass auf dem Bildschirm ein zweites Fenster oder ein zweiter Bereich vorgesehen ist, in dem die Typen von Temperaturänderungen angezeigt, von der Bedienperson ausgewählt und einer Startbedingung zugeordnet werden können.

6. Steuerungseinrichtung nach Anspruch 7 oder 8,
**dadurch gekennzeichnet, dass**
auf dem Bildschirm weitere Fenster oder Bereiche zur Auswahl oder zur Eingabe von Zahlenwerten für einen oder mehrere der folgenden Parameter vorgesehen sind:
- Zeit zur verzögerten Ansteuerung der Temperiereinrichtung,
- Temperatur-Sollwert,
- Maximale Einschaltdauer ED in Prozent,
- Dauer der ED, zum Beispiel in Sekunden.

7. Spritzgießmaschine mit einer Steuerungseinrichtung nach einem der vorstehenden Ansprüche.

8. Spritzgießmaschine nach Anspruch 7 und mit einer oder mehreren von der Steuerungseinrichtung ansteuerbaren Temperiereinrichtungen.

9. Spritzgießmaschine nach Anspruch 7 oder 8 und mit einem oder mehreren zu temperierenden Spritzgießwerkzeugen,
**dadurch gekennzeichnet, dass**
in der Steuerungseinrichtung eine Anzahl von auswählbaren zu temperierenden Bereichen des Spritzgießwerkzeugs hinterlegt sind und dass von der Bedienperson ein oder mehrere bestimmte Bereiche ausgewählt werden können.

10. Spritzgießmaschine nach Anspruch 9,
**dadurch gekennzeichnet, dass**
verschiedenen Bereichen eines Spritzgießwerkzeugs unterschiedliche Temperatur-Sollwerte, insbesondere unterschiedliche Sollwert-Temperaturprofile, zugeordnet werden können.

11. Verfahren zum Erstellen eines Sollwert-Temperaturprofils in einer Steuerungseinrichtung, in der mehrere für einen Spritzgießzyklus spezifische und während des Spritzgießzyklus eintretende Ereignisse und/oder Zustände sowie mehrere Typen von Temperaturänderungen hinterlegt sind und einer Bedienperson zur Auswahl zur Verfügung stehen, wobei die Ereignisse und/oder Zustände jeweils als eine Startbedingung zum Ansteuern einer oder mehrerer Temperiereinrichtungen zum Temperieren von Bereichen eines Spritzgießwerkzeugs vorgesehen sind,
**dadurch gekennzeichnet, dass**
einerseits bestimmte Ereignisse und/oder bestimmte Zustände sowie andererseits bestimmte Typen von Temperaturänderungen von einer Bedienperson ausgewählt und jeweils einander zugeordnet werden, dass eine Reihe aus mehreren derart einander zugeordneter Ereignisse und/oder Zustände einerseits sowie Typen von Temperaturänderungen andererseits gebildet wird, wobei ein zeitlicher Verlauf einer Temperatur entsprechend der so gebildeten Reihe erstellt wird, und wobei der zeitliche Verlauf der Temperatur durch die während des Spritzgießzyklus im Laufe der Zeit der Reihe nach eintretenden Ereignisse und/oder Zustände sowie den diesen Ereignissen und/oder Zuständen zugeordneten Typen von Temperaturänderungen vorgegeben ist.

12. Verfahren nach Anspruch 11,
**dadurch gekennzeichnet, dass**
den Startbedingungen Temperatur-Sollwerte zugeordnet werden, so dass bei Eintreten einer Startbedingung die Temperiereinrichtung angesteuert und in der Weise betrieben wird, dass die Temperatur in dem zu temperierenden Bereich in Richtung des für diesen Bereich vorgegebenen Temperatur-Sollwertes verändert wird.

13. Verfahren nach einem der vorstehenden Ansprüche,
**dadurch gekennzeichnet, dass**
zu jedem ausgewählten Ereignis und/oder ausgewähltem Zustand eine bestimmte Zeit in die Steuerungseinrichtung eingegeben wird, die nach Eintritt dieses Ereignisses oder dieses Zustandes verstreichen soll, bevor die Ansteuerung der Temperiereinrichtung erfolgen soll.

14. Verfahren nach einem der vorstehenden Ansprüche,
**dadurch gekennzeichnet, dass**
aus mehreren zur Verfügung stehenden Temperaturkanälen ein oder mehrere Temperaturkanäle ausgewählt werden, und dass für jeden ausgewählten Temperaturkanal ein eigenes Sollwert-Temperaturprofil erstellt wird.

15. Verfahren nach einem der vorstehenden Ansprüche,
**dadurch gekennzeichnet, dass**
für mehrere zu temperierende Bereiche eines Spritzgießwerkzeugs jeweils ein eigenes Sollwert-Temperaturprofil erstellt wird.

## Claims

1. A control unit for an injection moulding machine:
- wherein several events and/or states which are specific for an injection moulding cycle and which occur during the injection moulding cycle are stored or able to be stored in the control unit,
- wherein these events and/or states are respectively provided as a start condition for controlling one or more temperature control devices for the temperature control of an injection moulding tool,
- wherein these events and/or states are available to an operator for selecting particular events and/or particular states,
- wherein several types of temperature changes are stored or able to be stored in the control unit,
- wherein these types of temperature changes are available to the operator for selecting particular types of temperature changes, **characterized in that**
- on the one hand particular events and/or particular states and on the other hand particular types of temperature changes can be selected by the operator and associated respectively with one another,
- that a series of several such events and/or states associated with one another on the one hand and types of temperature changes on the other hand can be formed,
- that with a series formed in such a way, a chronological course of a temperature in a region of an injection moulding tool which is to be temperature-controlled can be set up by the operator, and
- that the chronological course of the temperature is predetermined by the events and/or states occurring in series during the injection moulding cycle over the course of time and the types of temperature changes associated with these events and/or states, so that the chronological course of the temperature set up in this way represents a cycle-synchronous temperature profile.

2. The control unit according to Claim 1,
**characterized in that**
desired temperature values can be associated with the start conditions and that on the occurrence of a start condition, the temperature control device can be actuated and operated such that the temperature is changed in the region which is to be temperature-controlled in the direction of the predetermined desired temperature value for this region.

3. The control unit according to one of the preceding claims,
**characterized in that**
a time-delayed actuation of the temperature control device is provided, wherein for each selected event and/or selected state a particular time can be entered into the control unit, which is to elapse after occurrence of this event or this state before the actuation of the temperature control device is to take place.

4. The control unit according to one of the preceding claims,
**characterized in that**
the following types of temperature changes are provided and can be selected by the operator:
- a temperature jump, wherein the temperature control device is to be operated such that the next desired temperature is reached as quickly as possible;
- a temperature ramp, wherein the temperature control device is to be operated such that the next desired temperature is to be reached on an ascending (for temperature increase) or descending (for temperature decrease) ramp, wherein the gradient of the ramp (ΔT/Δt) can be adjustable where applicable;
- a "standby" temperature change, wherein the operation of the temperature control device is merely discontinued and the tool temperature is not actively influenced in this time;
- no temperature change, wherein the attained or present temperature is to be maintained.

5. The control unit according to one of the preceding claims,
**characterized in that**
the operating unit is provided with a screen and that on the screen a first window or a first region is provided, in which the events and/or states are displayed and can be selected by the operator as start condition for actuating the temperature control device, and that on the screen a second window or a second region is provided, in which the types of temperature changes can be displayed, selected by the operator and associated with a start condition.

6. The control unit according to Claim 7 or 8,
**characterized in that**
further windows or regions are provided on the screen for selection or for input of numerical values for one or more of the following parameters:
- time for the delayed actuation of the temperature control device,
- desired temperature value,
- maximum on-time ED in percent,
- duration of ED, for example in seconds.

7. An injection moulding machine with a control unit according to one of the preceding claims.

8. The injection moulding machine according to Claim 7 and with one or more temperature control devices which are able to be actuated by the control unit.

9. The injection moulding machine according to Claim 7 or 8 and with one or more injection moulding tools which are to be temperature-controlled,
**characterized in that**
in the control unit a number of selectable regions of the injection moulding tool which are to be temperature-controlled are stored and that one or more particular regions can be selected by the operator.

10. The injection moulding machine according to Claim 9,
**characterized in that**
different desired temperature values, in particular different desired value temperature profiles can be associated with different regions of an injection moulding tool.

11. A method for setting up a desired value temperature profile in a control unit, in which several events and/or states specific for an injection moulding cycle and occurring during the injection moulding cycle and several types of temperature changes are stored and are available to an operator for selection, wherein the events and/or states are respectively provided as a start condition for actuating one or more temperature control devices for the temperature control of regions of an injection moulding tool,
**characterized in that**
on the one hand particular events and/or particular states and on the other hand particular types of temperature changes are selected by an operator and respectively associated with one another, that a series of several such events and/or states associated with one another on the one hand and types of temperature changes on the other hand is formed, wherein a chronological course of a temperature is set up in accordance with the series which is thus formed, and wherein the chronological course of the temperature is predetermined by the events and/or states occurring in series over the course of time during the injection moulding cycle and the types of temperature changes associated with these events and/or states.

12. The method according to Claim 11,
**characterized in that**
desired temperature values are associated with the start conditions, so that on an occurrence of a start condition the temperature control device is actuated and is operated such that the temperature in the region which is to be temperature-controlled is changed in the direction of the desired temperature value predetermined for this region.

13. The method according to one of the preceding claims,
**characterized in that**
for each selected event and/or selected state a particular time is entered into the control unit, which is to elapse after occurrence of this event or this state, before the actuation of the temperature control device is to take place.

14. The method according to one of the preceding claims,
**characterized in that**
one or more temperature channels are selected from several available temperature channels, and that for each selected temperature channel its own desired value temperature profile is set up.

15. The method according to one of the preceding claims,
**characterized in that**
for each of several regions of an injection moulding tool which are to be temperature-controlled its own desired value temperature profile is set up.

## Revendications

1. Unité de commande pour une presse à injecter
- plusieurs événements et/ou états spécifiques pour un cycle d'injection et intervenant pendant le cycle d'injection étant ou pouvant être sauvegardés dans le système de commande,
- lesdits événements et/ou états étant prévus chacun comme une condition de démarrage pour amorcer un ou plusieurs systèmes d'équilibrage de température pour tempérer un moule d'injection,
- lesdits événements et/ou états étant tenus à disposition d'un opérateur pour le choix de certains événements et/ou de certains états,
- plusieurs types de variations thermiques étant ou pouvant être sauvegardés dans le système de commande,
- lesdits types de variations thermiques étant tenus à disposition de l'opérateur pour le choix de certains types de variations thermiques, **caractérisé en ce que**
- d'une part certains événements et/ou certains états, ainsi que d'autre part certains types de variations de températures peuvent être choisis par l'opérateur et affectés chacun l'un à l'autre,
- **en ce qu'**une séquence de plusieurs événements et/ou de plusieurs états affectés de cette manière les uns aux autres, ainsi que des types de variations de températures peut être formée d'autre part,
- **en ce qu'**avec une séquence formée de cette manière, l'opérateur peut établir une courbe dans le temps d'une température dans une zone devant être tempérée d'un outil d'injection
et
- **en ce que** la courbe de température dans le temps est prescrite par les événements et/ou les états survenus dans le temps selon la séquence pendant le cycle d'injection, ainsi que par les types de variations de température affectés à ces événements et/ou états, de sorte que la courbe dans le temps de la température ainsi établie représente un profil de températures synchrone aux cycles.

2. Unité de commande selon la revendication 1, **caractérisée en ce que** des valeurs de consigne pour la température peuvent être affectées aux conditions de démarrage et **en ce que** lors de l'intervention d'une condition de démarrage, le système d'équilibrage de température peut être amorcé et exploité de la sorte que le température dans la zone à tempérer soit modifiée en direction de la valeur de consigne pour la température prescrite pour ladite zone.

3. Unité de commande selon l'une quelconque des revendications précédentes, **caractérisée en ce qu'**il est prévu un amorçage temporisé du système d'équilibrage des températures, pour chaque événement choisi et/ou pour chaque état choisi une certaine durée, qui doit s'écouler après l'intervention dudit événement ou dudit état pouvant être saisie dans l'unité de commande, avant que l'amorçage du système d'équilibrage de température ne doive avoir lieu.

4. Unité de commande selon l'une quelconque des revendications précédentes, **caractérisée en ce que** les types suivant de variations thermiques sont prévus et peuvent être choisis par l'opérateur :
- un saut thermique, le système d'équilibrage de température devant être manipulé de sorte à atteindre le plus rapidement possible la prochaine température de consigne ;
- une rampe thermique, le système d'équilibrage de température devant être exploité de sorte à atteindre la prochaine température de consigne sur une rampe ascendante (en cas de montée en température) ou sur une rampe descendante (en cas de retombée de température), l'inclinaison de la rampe (ΔT/Δt) pouvant être réglable, le cas échéant ;
- une variation de température « standby », le fonctionnement du système d'équilibrage de température étant simplement interrompu et la température du moule dans le temps n'étant pas activement influencée ;
- aucune variation de température, la température atteinte ou présente devant être maintenue.

5. Unité de commande selon l'une quelconque des revendications précédentes, **caractérisée en ce qu'**il est prévu un module de service avec un écran et **en ce que** sur l'écran, il est prévu une première fenêtre ou une première zone sur laquelle les événements et/ou les états sont affichés et peuvent être choisis par l'opérateur en tant que condition de démarrage pour amorcer le système d'équilibrage de température et **en ce que** sur l'écran, il est prévu une deuxième fenêtre ou une deuxième zone, sur laquelle sont affichés les types de variations thermiques qui peuvent être choisis par l'opérateur et affectés à une condition de démarrage.

6. Unité de commande selon la revendication 7 ou la revendication 8, **caractérisée en ce que** sur l'écran sont prévues des fenêtres ou des zones supplémentaires pour le choix ou pour la saisie de valeurs chiffrées pour un ou plusieurs des paramètres suivants :
- temps jusqu'à l'amorçage temporisé du système d'équilibrage de température,
- valeur de consigne pour la température,
- durée maximale de mise en route ED en pourcentage,
- durée de l'ED, par exemple en secondes.

7. Presse à injecter avec une unité de commande selon l'une quelconque des revendications précédentes.

8. Presse à injecter selon la revendication 7 et avec un ou plusieurs systèmes d'équilibrage de température amorçables par l'unité de commande.

9. Presse à injecter selon la revendication 7 ou la revendication 8, avec un ou plusieurs moules d'injection devant être tempérés, **caractérisée en ce que** dans l'unité de commande sont sauvegardées un certain nombre de zones à tempérer sélectionnables de la presse à injecter et **en ce que** l'opérateur peut sélectionner une ou plusieurs zones précises.

10. Presse à injecter selon la revendication 9, **caractérisée en ce qu'**on peut affecter à différentes zones d'un moule d'injection différentes valeurs de consigne pour la température, notamment différents profils de température à valeurs de consigne.

11. Procédé destiné à régler un profil de température à valeurs de consigne dans une unité de commande dans laquelle plusieurs événements et/ou états spécifiques pour un cycle d'injection et intervenant pendant le cycle d'injection, ainsi que plusieurs types de variations thermiques sont sauvegardés et sont tenus à la disposition pour être choisis par un opérateur, les événements et/ou états étant prévus chacun en tant qu'une condition de démarrage pour l'amorçage d'un ou de plusieurs systèmes d'équilibrage de température pour tempérer des zones d'une presse d'injection, **caractérisé en ce que** certains événements et/ou certains états d'une part ainsi que certains types de variations thermiques d'autre part sont choisis et se sont mutuellement affectés par un opérateur, **en ce qu'**une séquence de plusieurs événements et/ou états mutuellement affectés de cette manière d'une part ainsi que des types de variations thermiques d'autre part sont formés, une courbe dans le temps d'une température correspondant à la séquence ainsi formée étant établie et la courbe de la température dans le temps étant prescrite par les événements et/ou les états intervenant au cours du temps, selon la séquence pendant le cycle d'injection, ainsi que par les types de variations thermiques affectés audits événements et/ou états.

12. Procédé selon la revendication 11, **caractérisé en ce qu'**aux conditions de démarrage sont affectées des valeurs de consigne de température, de sorte que lors de l'intervention d'une condition de démarrage, le système d'équilibrage de température soit amorcé et exploité de sorte que la température dans les zones à tempérer soit modifiée dans la direction de la valeur de consigne de température prescrite pour ladite zone.

13. Procédé selon l'une quelconque des revendications précédentes, **caractérisé en ce qu'**on saisit dans l'unité de commande pour chaque événement choisi et/ou pour chaque état choisi, un certain temps qui doit s'écouler après l'intervention dudit événement ou dudit état avant que le système d'équilibrage de température doit être amorcé.

14. Procédé selon l'une quelconque des revendications précédentes, **caractérisé en ce qu'**on choisit parmi plusieurs canaux de température tenus à disposition un ou plusieurs canaux de température et **en ce que** pour chaque canal de température choisi, on établit un propre profil de température à valeurs de consigne.

15. Procédé selon l'une quelconque des revendications précédentes, **caractérisé en ce que** pour plusieurs zones à tempérer d'un moule d'injection il est chaque fois établi un propre profil de température à valeurs de consigne.
